# EUROPÄISCHE PATENTSCHRIFT

(11) **EP 2 696 159 B1**
(45) Veröffentlichungstag und Bekanntmachung des Hinweises auf die Patenterteilung: **30.08.2017**
(21) Anmeldenummer: 13175842.7
(22) Anmeldetag: 10.07.2013
(51) Int. Cl.: F28F 25/02, B05B 12/00, F28F 27/02

(54) **Wärmeaustauscher und Verfahren zur Benetzung von Wärmeaustauschern**
Heat exchanger and method for wetting heat exchangers
Échangeur thermique et procédé de mise en réseau d'échangeurs thermiques

(30) Priorität: 09.08.2012 EP 12179934
(43) Veröffentlichungstag der Anmeldung: 12.02.2014
(60) Teilanmeldung: 17172125.1
(73) Patentinhaber: A-heat Allied Heat Exchange Technology Ag, 1120 Wien (AT)
(72) Erfinder: Klöppner, Michael, 82288 Kottgeisering (DE)
(74) Vertreter: Intellectual Property Services GmbH

(56) Entgegenhaltungen:
- WO-A1-96/07863
- CH-A5- 693 043
- DE-A1- 2 840 317
- DE-A1-102010 055 449
- FR-A1- 2 096 556
- FR-A1- 2 724 220
- GB-A- 1 354 607
- US-A- 3 384 165

## Beschreibung

Die Erfindung betrifft einen Wärmeaustauscher gemäss dem Oberbegriff des Anspruchs 1. CH693043 offenbart einen derartiger Wärmeaustauscher. Die Erfindung betrifft des Weiteren die Verwendung eines mit einer Benetzungsvorrichtung versehenen Wärmeaustauschers in einer Kälteanlage für die Raumkühlung oder Rückkühlung. Insbesondere kann ein derartiger Wärmaustauscher in der Nahrungsmittelindustrie, der chemischen Industrie, der pharmazeutischen Industrie oder beim Abkühlen oder Gefrieren von Produkten zum Einsatz kommen.

Die Erfindung betrifft auch ein Verfahren zur Benetzung eines Wärmeaustauschers, gemäss dem Oberbegriff des Anspruchs 9. In verschiedenen Bereichen müssen Produkte, Prozesse oder Medien gekühlt, gefroren oder tiefgekühlt werden. Hierfür kommen Industriekälteanlagen zum Einsatz, die in der Regel für grosse Kälteleistungen ausgelegt sind, und daher einen nicht zu vernachlässigenden Energiebedarf aufweisen.

Um diesen Energiebedarf zu reduzieren, sind verschiedene Lösungswege beschritten worden. Einerseits kann die Bauweise des Wärmeaustauschers verändert werden, andererseits kann eine Benetzung des Wärmeaustauschers vorgesehen werden, wie beispielsweise in WO2010/040635 A1 offenbart ist. Dieses Dokument zeigt einen lamellierten Wärmeaustauscher, der im einfachsten Fall aus einem Rohr zur Durchleitung eines Wärmeübertragungsmediums und einer Vielzahl von Lamellen besteht, die mit dem Rohr verbunden sind und im Betrieb mit einem zweiten Medium in Verbindung stehen. Diese Bauweise ist besonders zweckmässig, wenn das zweite Medium gasförmig ist und beispielsweise aus Umgebungsluft besteht, da diese einen vergleichsweise niedrigen Wärmeübertragungskoeffizienten hat, der durch eine entsprechend grosse Oberfläche der Lamellen ausgeglichen werden kann. Selbstverständlich kann der lamellierte Wärmeaustauscher auch mehrere Rohre für mehr als ein Wärmeübertragungsmedium enthalten oder die Rohre können je nach Bedarf parallel und/oder in Serie miteinander verbunden sein.

Eine allgemeine Beschreibung von lamellierten Röhrenwärmeaustauschern findet sich auch in der WO2011/003444 A1.

Die Wärmeübertragungsrate bzw. der Wirkungsgrad werden wesentlich durch die Temperaturdifferenz zwischen den Lamellen einerseits und dem oder den Rohren andererseits bestimmt. Die Temperaturdifferenz ist umso kleiner, je grösser die Leitfähigkeit und die Dicke der Lamelle ist und je kleiner der gegenseitige Abstand der Rohre ist. Seit einigen Jahren werden deshalb sogenannte Microchannel-Wärmeübertragungselemente eingesetzt. Diese können beispielsweise als Strangpressprofil ausgeführt sein, das aus einem Material mit guter Wärmeleitfähigkeit, wie beispielsweise Aluminium hergestellt ist. Die Microchannel-Wärmeübertragungselemente enthalten eine Vielzahl von Kanälen mit einem Durchmesser von üblicherweise im Bereich von 0.5 bis 3 mm für das Wärmeübertragungsmedium. Anstatt kleiner Rohre werden beim Microchannel-Wärmeübertragungselement vorzugsweise Aluminiumstranggussprofile verwendet.

Ein weiterer Ansatz in der Verbesserung der Wärmeübertragung besteht darin, gut wärmeleitfähige Materialien für die Lamellen oder Rohre vorzusehen. Da allerdings der Einsatz von sehr gut wärmeleitfähigen Materialien, wie beispielsweise Kupfer, sich in Industriekälteanlagen aufgrund der Materialkosten als eine nicht wirtschaftliche Alternative erwiesen hat, ist eine Optimierung in diesem Bereich nur unter Berücksichtigung der Materialkosten zu vertreten und somit de facto auf die Auswahl von kostengünstigeren Materialien, wie beispielswiese Aluminium beschränkt.

Somit hat sich der in der WO2010/040635 A1 beschrittene Weg des Einsatzes einer Benetzungsvorrichtung als vorteilhafterer Ansatz zur Verringerung der Betriebskosten des Wärmeaustauschers herausgestellt.

Aufgabe der Erfindung ist es, die Effizienz eines Wärmeaustauschers, welcher mindestens zwei Module umfasst, zu verbessern.

Die Lösung der Aufgabe erfolgt durch einen Wärmeaustauscher gemäss Anspruch 1 und ein Verfahren zur Benetzung eines Wärmeaustauschers gemäss Anspruch 9. Mittels der ersten und zweiten Benetzungsvorrichtung, welche insbesondere Sprühvorrichtungen sind, wirddas zweite fluide Medium bzw. der Wärmeaustauscher oder das geschlossene Kanalsystem mit einem dritten fluiden Medium benetzt. Wenn es sich um eine Sprühvorrichtung handelt, ist dementsprechend ein drittes fluides Medium in das zweite fluide Medium bzw. auf den Wärmeaustauscher oder das geschlossene Kanalsystem sprühbar. Selbstverständlich können auch mehr als zwei Module vorgesehen sein. Wird eine Vielzahl von Modulen vorgesehen, insbesondere mindestens 8 Module, kann auch vorgesehen werden, dass die Benetzungsvorrichtungen von jeweils zwei Modulen paarweise gemeinsam geregelt werden, das heisst, die Zufuhr von drittem Medium zu den paarweise zusammengeschalteten Modulen gemeinsam erfolgt.

Der erfindungsgemässe Wärmeaustauscher haben den Vorteil, dass dank der für jedes Modul separat bzw. individuell zuschaltbaren Benetzungsvorrichtung die Kühlleistung gezielt an den Bedarf angepasst werden kann, sodass mittels einer Temperaturregelung genau die benötigte Kühlleistung geliefert wird. Durch die Benetzung wird die Kühlleistung bei vorgegebener Gesamtaustauschfläche der Module und bei vorgegebener Strömungsgeschwindigkeit des zweiten Mediums die Kühlleistung gegenüber einem Wärmeaustauscher ohne Benetzungsvorrichtung erhöht bzw. für eine vorgegebene Kühlleistung die Gesamtaustauschfläche aller Module verringert. Der Wirkungsgrad des Wärmeaustauschers wird durch die Benetzungsvorrichtung somit erhöht und durch die Möglichkeit, die Benetzungsvorrichtungen jedes einzelnen Moduls selektiv zu regeln, optimiert.

Ein grosser Vorteil des erfindungsgemässen Wärmeaustauschers ist das Vermeiden eines sprunghaften Leistungsanstiegs bei Einsetzen der Benetzung, just zu dem Zeitpunkt an welchem die Benetzungsvorrichtung zugeschaltet wird. Im Gegensatz zum Stand der Technik wird der Wärmeaustauscher nicht vollflächig benetzt, beispielsweise besprüht, was zur Folge hätte, dass die Leistung infolge der Benetzung sprunghaft ansteigt, da der Wärmeaustausch über die Gesamtaustauschfläche aller Module gleichzeitig erhöht wird. Die Regelung des Wärmeaustauschers kann somit gegenüber dem Stand der Technik insgesamt verbessert werden, weil mit der erfindungsgemässen Lösung eine höhere Präzision der Regelung ermöglicht wird, die für die Lösung nach dem Stand der Technik bisher nicht möglich war.

Dies hat auch einen wesentlich geringeren Verbrauch an drittem Medium, also insbesondere der Sprühflüssigkeit, zur Folge. Gegenüber dem Stand der Technik, also beispielsweise der in WO2010/040635 A1 beschriebenen Lösung, kann bis zu 95% des dritten Mediums eingespart werden, wobei die Dauer der Benetzung gleich ist. Das heisst, dass eine substantielle Einsparung an drittem Medium, also der Sprühflüssigkeit, insbesondere Wasser erfolgt. Dies hat auch zur Folge, dass der Einsatz an Reinigungsmitteln zur Aufbereitung der Sprühflüssigkeit reduziert werden kann. Zudem wird durch den selektiven Einsatz von Benetzungsvorrichtungen die Lebensdauer derselben sowie die Lebensdauer des Wärmeaustauschers erhöht.

Andererseits kann es durch den Einsatz einer Benetzungsvorrichtung zu Korrosionserscheinungen am Wärmeaustauscher kommen, was bei einer exzessiven Betriebsdauer der Benetzungsvorrichtung zu Schäden führen kann. Daher ist bisher die jährliche Einsatzdauer von Benetzungsvorrichtungen beschränkt worden. Wenn die Benetzungsvorrichtungen unabhängig voneinander zuschaltbar sind, insbesondere sequenziell zuschaltbar sind, kann somit die jährliche Einsatzdauer insgesamt verlängert werden.

Erfindungsgemäss wird somit nur ein Teil des Wärmeaustauschers, ein Modul, mit dem dritten Medium benetzt, das heisst insbesondere besprüht. Unter einem Modul des Wärmeaustauschers wird im Rahmen dieser Anmeldung eine von einem Ventilator erfasste Kammer verstanden.

Die Benetzung eines jeden Moduls erfolgt sequenziell, das heisst einzelne Module werden zeitlich nacheinander mit dem dritten Medium benetzt. Das heisst insbesondere, die gesamte Dauer der Besprühung setzt sich aus den einzelnen Zeitperioden zusammen, in denen je ein Modul mit Wasser besprüht wird. Dabei wird durch die Regelung sichergestellt, dass die Zeitperiode für jedes einzelne Modul im wesentlich gleich lang ist, das heisst, das die Zeitperioden für die Besprühung für jedes Moduls im wesentlichen gleich lang sind. Somit sind am Ende der Nutzungsdauer des Wärmeaustauschers alle Module während einer im wesentlichen gleich lang andauernden Zeitperiode benetzt worden, bzw. die Einsatzdauer jeder der Benetzungsvorrichtungen im wesentlichen gleich.

Da es in vielen Anwendungsfällen für die Verbesserung des Wärmeübergangs nicht erforderlich ist, dass alle Module gleichzeitig benetzt werden, es sogar denkbar ist, dass nur ein einziges Modul benetzt werden muss, kann die Standzeit des Wärmeaustauschers wesentlich erhöht werden.

Die erfindungsgemässe Lösung ist solange mit Vorteil anwendbar, solange die Benetzungsvorrichtungen für mindestens die Hälfte der Module unabhängig voneinander regelbar sind. Zusammengeschaltete Module bilden dann sogenannte Modulgruppen. Module können vorteilhafterweise zu Modulgruppen zusammengefasst werden, wenn die Gesamtzahl der Module grösser als vier ist.

Das erste Medium kann beispielsweise ein flüssiger Kälteträger oder Wärmeträger sein oder ein verdampfendes bzw. kondensierendes Wärmemittel. Dabei ist im Rahmen dieser Anmeldung unter dem Begriff "Wärmemittel" jedes Fluid zu verstehen, das vorteilhaft in einem Wärmeaustauscher verwendet werden kann. Der Begriff "Wärmemittel" umfasst somit sowohl die bekannten Kältemittel als auch jedes andere geeignete Wärmeträgermedium, insbesondere auch ein Kühlmittel.

Das zweite Medium ist das Umgebungsmedium, welches sich ausserhalb des geschlossenen Kanalsystems des Wärmeaustauschers befindet. Dieses zweite Medium kann in flüssigem Zustand vorliegen, beispielsweise Wasser, Öl oder auch im gasförmigen Zustand vorliegen, also insbesondere Umgebungsluft sein oder enthalten. Durch das zweite Medium kann Wärme aufgenommen werden oder Wärme kann auf das zweite Medium übertragen werden, sodass es abkühlt oder sich erwärmt. Erfindungsgemäss ist ein erstes Absperrelement für die erste Benetzungsvorrichtung und ein zweites Absperrelement für die zweite Benetzungsvorrichtung vorgesehen. Das Absperrelement kann zumindest ein mittels eines Magnets betätigbares Ventil, ein hydraulisch betätigbares Ventil, ein pneumatisch betätigbares Ventil oder eine Pumpe umfassen. Erfindungsgemäss ist ein Kontrollsystem vorgesehen, mittels welchem die Nutzungsdauer jedes der Absperrelemente erfassbar ist, sodass die Absperrelemente basierend auf Daten zur Nutzungsdauer zuschaltbar sind. Insbesondere kann das Kontrollsystem eine Speichereinheit aufweisen, in welcher die Dauer der einzelnen Benetzungen für jedes Modul abgelegt ist, sodass die gesamte Nutzungsdauer und die Summe der Benetzungen pro Modul errechenbar ist und mit einer Gesamtnutzungsdauer vergleichbar ist. Mit diesem Kontrollsystem können auch Wartungsintervalle programmiert werden, sodass bei Erreichen einer bestimmten Nutzungsdauer eine Wartung des Wärmeaustauschers oder jedes der Module individuell erfolgen kann.

Die Dauer der einzelnen Benetzungen erfolgt derart, dass stets Wasserüberschuss auf dem Wärmetauscher herrscht. Das hat den Vorteil, dass sich keine Ablagerungen bilden und durch den Wasserüberschuss gleichzeitig eine Reinigungswirkung erzielt wird, wodurch sich die Lebensdauer des Wärmetauschers erhöht.

Ausserdem kann die erste Benetzungsvorrichtung um eine Zeitperiode versetzt zur zweiten Benetzungsvorrichtung zuschaltbar sein. Je nach Bedarf kann daher jeweils nur eine einzige Benetzungsvorrichtung des jeweiligen Moduls mit der geringsten Nutzungsdauer zugeschaltet werden. Sollte die Zuschaltung einer einzigen Benetzungsvorrichtung nicht ausreichen, um die nötige Wärmeaustauschleistung zu erhalten, ist es möglich, eine oder weitere Benetzungsvorrichtungen bei Bedarf zuzuschalten. Das Kontrollsystem addiert in diesem Fall automatisch die einzelnen Nutzungsdauern jeder Benetzungsvorrichtung zu einer Gesamtnutzungsdauer der jeweiligen Benetzungsvorrichtung.

Das geschlossene Kanalsystem kann zumindest ein Rohrsystem, ein System von Lamellen oder ein System von Platten zur Aufnahme des ersten fluiden Mediums umfasst. Insbesondere kann das geschlossene Kanalsystem als lamellierter Röhrenwärmeaustauscher ausgebildet sein, der nach einem beispielsweise in der WO2011/034444 A1 offenbarten Verfahren hergestellt ist. Die Lamellen werden mit einer Presse und einem speziellen Werkzeug gestanzt und in Pakete zueinander gelegt. Anschliessend werden Rohre zwischen je zwei benachbarte Lamellen eingeschoben. Diese Rohre werden im Anschluss mechanisch oder hydraulisch aufgeweitet, sodass ein sehr guter Kontakt und somit ein guter Wärmeübergang zwischen Rohr und Lamelle entsteht. Die Rohre, welche die Lamellen traversieren, werden an deren Enden durch Bögen untereinander verbunden oder durch ein Sammel- und Verteilrohr miteinander verbunden, beispielsweise durch Verlöten.

Als weitere vorteilhafte Massnahme sind das erste Modul und das zweite Modul des Wärmeaustauschers derart ausgestaltet sind, sodass das geschlossene Kanalsystem mittels der ersten Benetzungsvorrichtung und / oder der zweiten Benetzungsvorrichtung direkt benetzbar sind.

Nach einem Ausführungsbeispiel ist das Kanalsystem in einem Neigungswinkel zur Vertikalrichtung angeordnet. Insbesondere für den Einsatz eines Moduls mit Microchannel-Wärmeübertragungselementen hat sich die in der WO2010/040635 A1 vorgeschlagene Anordnung als vorteilhaft herausgestellt, bei welcher eine Mehrzahl von Microchannel-Wärmeübertragungselemente und eine Mehrzahl von Wärmeaustauschrippen vorgesehen sind, die miteinander wärmeleitend verbunden sind. Durch die Wärmeaustauschrippen werden Luftkanäle gebildet. Die Luft in den Luftkanälen wir durch eine Belüftungsvorrichtung in Bewegung gehalten.

Diese Wärmeaustauscheranordnung umfasst eine Benetzungsvorrichtung, um das geschlossene Kanalsystem, das zumindest ein Rohrsystem, ein System von Lamellen oder ein System von Platten zur Aufnahme des ersten fluiden Mediums umfasst, insbesondere Microchannel-Wärmeübertragungselemente und / oder Wärmeaustauschrippen, mit Flüssigkeit, beispielsweise Wasser, zu benetzen.

Die Module sind bezüglich der senkrechten, also der Vertikalrichtung, in einem Neigungswinkel angeordnet. Vorteilhafterweise ist der Winkel dadurch bestimmt, dass im Betrieb die Schwerkraft und/oder die Trägheitskräfte, die auf oder in einem Wärmeaustauschermodul auf Tropfen der Flüssigkeit wirken, im Gleichgewicht mit den Auftriebskräften der Luftströmung sind. Gemäss einer Variante liegt der Winkel bezüglich der Vertikalrichtung im Bereich von mindestens 10° bis und mit 40°, vorzugsweise im Bereich von mindestens 15° bis und mit 30°. Auch die Microchannel-Wärmeübertragungselemente können in ihrer Längsrichtung in einem Winkel zur Vertikalrichtung angeordnet sein. Der Winkel kann mit dem Neigungswinkel des Wärmeaustauschermoduls, in welchem sie enthalten sind, übereinstimmen.

Gemäss eines weiteren Ausführungsbeispiels weisen die Module eine Unterseite und eine Oberseite auf, insbesondere wenn sie gegenüber der Vertikalrichtung geneigt ausgebildet sind. Eine Belüftungseinrichtung ist vorgesehen, um in den Luftkanälen eine Luftströmung von der Unterseite zur Oberseite zu erzeugen. Die Benetzungsvorrichtung ist vorgesehen, um die Microchannel-Wärmeübertragungselemente und/oder die Wärmeaustauschrippen von der Unterseite oder der Oberseite her zu benetzen. Die Benetzungsvorrichtung kann insbesondere derart ausgestaltet sein, dass die Microchannel-Wärmeübertragungselemente und/oder die Wärmeaustauschrippen sowohl von der Unterseite als auch von der Oberseite her benetzt werden. Die Belüftungsvorrichtung kann in den Luftkanälen auch eine Luftströmung von der Oberseite zur Unterseite erzeugen.

Eine Temperaturregelung kann zur Zuschaltung jeder der ersten oder zweiten Benetzungsvorrichtungen vorgesehen sein. Die Temperaturregelung umfasst ein Temperaturmessgerät, welches die Temperatur des zweiten Mediums erfasst. Steigt dessen Temperatur über einen definierten Grenzwert an und soll das zweite Medium gekühlt werden, wird eine der Benetzungsvorrichtungen zugeschaltet, indem das Kontrollsystem die Anweisung erteilt, das entsprechende Absperrelement zu öffnen. Steigt die Temperatur weiterhin an, erteilt das Kontrollsystem die Anweisung, ein weiteres Absperrelement für ein weiteres Modul zu öffnen. Welches der Absperrelemente vorrangig geöffnet wird, hängt von der gespeicherten Gesamtnutzungsdauer ab. Das Kontrollsystem ist vorzugsweise derart eingestellt, dass zuerst das Absperrelement mit der kürzesten Gesamtnutzungsdauer geöffnet wird.

Des Weiteren kann der Wärmeaustauscher zusätzlich eine eingangsseitig in der Luftströmung angeordnete Befeuchtungseinrichtung zur Kühlung der Luft und/oder einen ausgangsseitig in der Luftströmung angeordneten Tropfenfänger aufweisen.

Ein Wärmeaustauscher nach einem der vorhergehenden Ausführungsbeispiele kann in einer Kälteanlage für die Raumkühlung und / oder Rückkühlung verwendet werden. Des weiteren kann ein Wärmeaustauscher nach einem der vorhergehenden Ausführungsbeispiele zur Abkühlung oder zum Gefrieren von Produkten oder aber zur Kühlung von Nahrungsmitteln, insbesondere Molkereiprodukten, Getränken, Backwaren, Fertigprodukten, Süsswaren, Gemüse, Früchten oder zur Gefrierung von Nahrungsmitteln, insbesondere Fleisch, Fisch, Teigwaren oder Fertigprodukten oder zur Gefriertrocknung verwendet werden.

Insbesondere die Lagerung von frischen Früchten und Gemüse erfordert eine genaue Kenntnis der spezifischen Eigenschaften der Produkte. Um diese Produkte saisonunabhängig lagern zu können, sind die Anforderungen an Temperatur, Luftfeuchtigkeit und Luftströmung speziell an das zu lagernde Produkt anzupassen. Die Wärmeaustauscher kommen hier für Langzeitlager, Zwischenlager oder für Reifeprozesse, beispielsweise Bananenreifeanlagen, zum Einsatz.

Ein Wärmeaustauscher kann sowohl bei der Produktion von Nahrungsmitteln, chemischen Substanzen oder pharmazeutischen Wirkstoffen für die Kühlung der Produkte aber auch für die Raumkühlung zum Einsatz kommen. Der Wärmeaustauscher kann auch für die Langzeitlagerung, für Umschlaglager oder Frischelager verwendet werden, wobei für diese Anwendungen insbesondere eine gleichmässige Temperaturverteilung, eine hohe Ausfallsicherheit sowie niedrige Betriebskosten eine bedeutende Rolle spielen. Insbesondere für chemische Produkte können zusätzlich noch Explosionsschutz, Korrosionsschutz und besondere hygienische Vorschriften von Bedeutung sein, sodass eine bestimmte Raumtemperatur möglichst präzise eingehalten werden muss.

Für das Abkühlen und Gefrieren von Produkten ist neben der Absenkung der Raumtemperatur oftmals eine schnelle Abkühlung oder schnelles Gefrieren von Bedeutung. Die Leistungsfähigkeit einer derartigen Industriekälteanlage kann durch hohe Luftgeschwindigkeiten durch Verwendung von Ventilatoren mit externer Pressung, durch spezielle Lamellenabstände oder durch eine angepasste Luftführung erfolgen.

Das erfindungsgemässe Verfahren zur Benetzung eines Wärmeaustauschers hat, gemäss der bereits beschriebenen Vorrichtung den Vorteil, dass dank der für jedes Modul separat bzw. individuell zuschaltbaren Benetzungsvorrichtung die Kühlleistung gezielt an den Bedarf angepasst werden kann, sodass mittels einer Temperaturregelung genau die benötigte Kühlleistung geliefert wird. Durch die Benetzung wird die Kühlleistung bei vorgegebener Gesamtaustauschfläche der Module und bei vorgegebener Strömungsgeschwindigkeit des zweiten Mediums die Kühlleistung gegenüber einem Wärmeaustauscher ohne Benetzungsvorrichtung erhöht bzw. für eine vorgegebene Kühlleistung die Gesamtaustauschfläche aller Module verringert. Der Wirkungsgrad des Wärmeaustauschers wird durch die Benetzungsvorrichtung somit erhöht und durch die Möglichkeit, die Benetzungsvorrichtungen jedes einzelnen Moduls selektiv zu regeln, optimiert. Insbesondere kann die erste Benetzungsvorrichtung gleichzeitig oder zeitlich versetzt zur zweiten Benetzungsvorrichtung betätigt werden, sodass eine lokale und somit sequenzielle Benetzung des ersten Moduls unabhängig vom zweiten Modul erfolgen kann. Diese vorteilhafte Massnahme ermöglicht es eine gleichmässige Besprühung der Module über die Nutzungsdauer sicherzustellen.

Nach einem Ausführungsbeispiel wird die Austrittstemperatur des ersten fluiden Mediums aus dem Wärmeaustauscher gemessen wird und in Abhängigkeit von der Austrittstemperatur zumindest eine der Benetzungsvorrichtungen zugeschaltet oder abgeschaltet. Alternativ oder in Ergänzung hierzu kann auch die Temperatur des zweiten Mediums gemessen werden und eine Zuschaltung jeder der Benetzungsvorrichtungen individuell erfolgen, wenn die Temperatur des zweiten Mediums die zulässige Maximaltemperatur übersteigt. Erfindungsgemäss kann die Nutzungsdauer jeder der Benetzungsvorrichtungen von einem Kontrollsystem registriert werden und jede der Benetzungsvorrichtungen in Abhängigkeit von der bisherigen Nutzungsdauer bei Bedarf zugeschaltet werden.

Nach einem Ausführungsbeispiel kann auch die Geschwindigkeit der Luftströmung derart reguliert werden, dass von der auf einem Modul vorhandenen dritten Mediums, das heisst der Flüssigkeit, durch die Luftströmung keine oder höchstens eine festgelegte Menge an Tropfen mitgerissen werden kann. Insbesondere kann die Menge der Flüssigkeit, die zur Benetzung der Microchannel-Wärmeübertragungselemente und/oder der Wärmeaustauschrippen zugeführt wird, und die Geschwindigkeit der Luftströmung derart reguliert werden, dass die Schwerkraft und/oder die Trägheitskräfte, die auf oder in einem Modul auf Tropfen des dritten Mediums wirken, im Gleichgewicht mit den Auftriebskräften der Luftströmung sind.

Die obige Beschreibung sowie die Ausführungsbeispiele dienen lediglich als Beispiel zur Erläuterung der Funktionsweise der Erfindung. Weitere vorteilhafte Ausführungsbeispiele gehen aus den abhängigen Ansprüchen sowie den Zeichnungen hervor. Darüber hinaus können im Rahmen der vorliegenden Erfindung auch einzelnen Merkmale aus den beschriebenen oder gezeigten Ausführungsbeispielen miteinander beliebig kombiniert werden.

Nachfolgend wird die Erfindung anhand der beiliegenden Zeichnungen näher erläutert.

Es zeigen
Fig. 1 eine Ansicht eines Moduls von Wärmeaustauschern gemäss eines Ausführungsbeispiels der Erfindung,
Fig. 2 eine Ansicht eines Moduls von Wärmeaustauschern gemäss des Standes der Technik,
Fig. 3 ein Diagramm, das die Vorteile des erfindungsgemässen Wärmeaustauschers verdeutlicht,
Fig. 4 eine schematische Darstellung des Kanalsystems eines Wärmeaustauschers,
Fig. 5 einen Schnitt entlang der Linie A-A der Fig. 1.

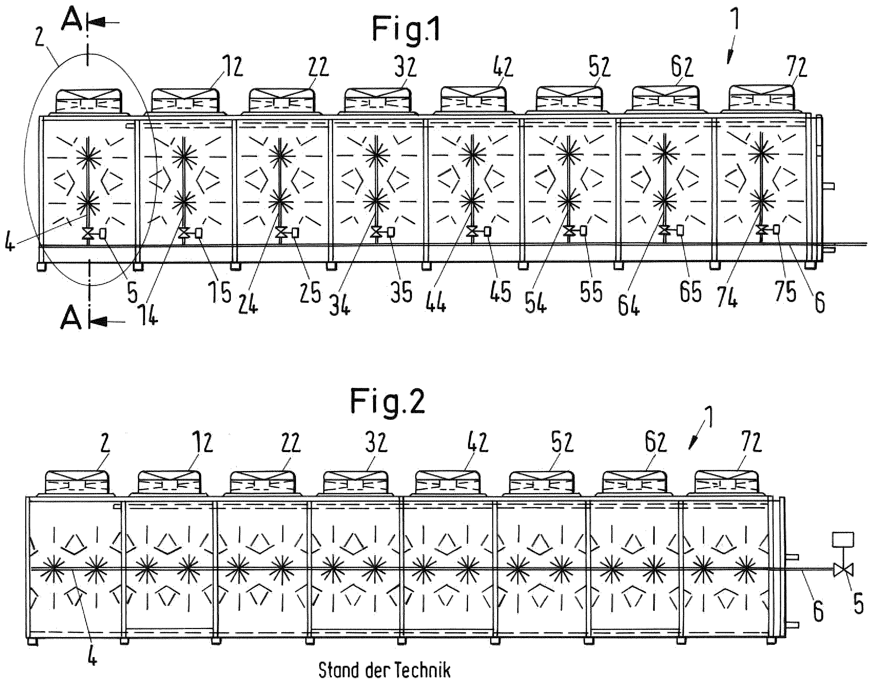

Der Wärmeaustauscher 1 gemäss Fig. 1 weist eine Benetzungsvorrichtung auf. Dieser Wärmeaustauscher 1 weist ein erstes Modul 2 und ein zweites Modul bis ein achtes Modul 12, 22, 32, 42, 52, 62, 72 auf. Jedes der Module ist mit einer Belüftungsvorrichtung, beispielsweise einem Ventilator, ausgestattet, um eine Durchströmung des Moduls mit Luft zu ermöglichen.

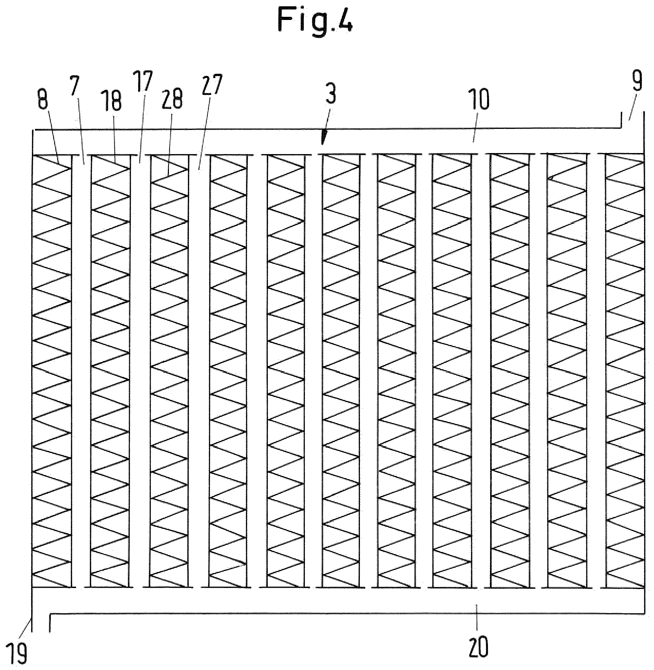

In jedem Modul erfolgt ein Wärmeaustausch zwischen einem ersten fluiden Medium und einem zweiten fluiden Medium. Das erste fluide Medium wird durch ein geschlossenes Kanalsystem 3 getrennt vom zweiten fluiden Medium geführt, sodass das erste Medium mit dem zweiten Medium nicht in Kontakt kommt, was in Fig. 4 dargestellt ist. Das geschlossene Kanalsystem ist vom zweiten fluiden Medium umströmt. Das zweite fluide Medium ist gasförmig. Das geschlossene Kanalsystem 3 enthält mehrere Microchannel-Wärmeübertragungselemente 7, 17, 27 von denen der Übersicht halber nur drei mit Bezugszeichen versehen worden sind. Die Microchannel-Wärmeübertragungselemente 7, 17, 27 können beispielsweise als flache Rohre ausgeführt sein, die parallel zueinander angeordnet sind. Benachbarte Microchannel-Wärmeübertragungselemente 7, 17, 27 sind in einem Abstand zueinander angeordnet und eine Mehrzahl von Wärmeaustauschrippen 8, 18, 28 sind zwischen den Microchannel-Wärmeübertragungselementen 7, 17, 27 angeordnet und mit denselben wärmeleitend verbunden, beispielsweise über eine Lötverbindung. Durch die Wärmeaustauschrippen 8, 18, 28 werden Luftkanäle gebildet, die im in Fig. 2 gezeigten Modul senkrecht zur Bildebene verlaufen. Üblicherweise sind die Wärmeaustauschrippen aus einem gefalteten Blechstreifen hergestellt, der ein Zick-Zack-Muster aufweisen kann.

Die Microchannel-Wärmeübertragungselemente 7, 17, 27 können als Strangpressprofil ausgeführt sein, das aus einem Material mit guter Wärmeleitfähigkeit wie zum Beispiel Aluminium oder einer Aluminiumlegierung hergestellt ist. Die Microchannel-Wärmeübertragungselemente 7, 17, 27, das heisst im vorliegenden Fall die Strangpressprofile, enthalten eine Vielzahl von Kanälen mit einem Durchmesser von 0.5 bis maximal 3 mm.

Zur Zuleitung des zweiten Mediums ist ein Einlasselement 9 vorgesehen, welches in einen Einlasssammelkanal 10 mündet. Vom Einlasssammelkanal 10 führen die Microchannel-Wärmeübertragungselemente 7, 17, 27 zum Auslasssammelkanal 20, der in ein Auslasselement 19 mündet.

Vorteilhafterweise werden die einzelnen Teile des Moduls wie beispielsweise die Microchannel-Wärmeübertragungselemente 7, 17, 27, die Wärmeaustauschrippen 8, 18, 28, die Einlass- und Auslasssammelkanäle 10, 20 und die Ein- und Auslasselemente 9, 19 aus Aluminium oder einer Aluminiumlegierung gefertigt und die zusammengestellten Teile in einem Lötofen miteinander verlötet.

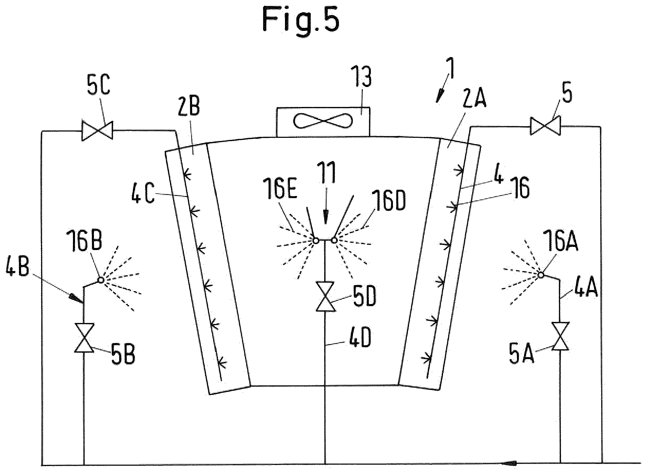

Fig. 1 zeigt eine Benetzungsvorrichtung 4 für das erste Modul 2, sowie entsprechende zweite bis achte Benetzungsvorrichtungen 14, 24, 34, 44, 54, 64, 74 für die zweiten bis achten Module 12, 22, 32, 42, 52, 62, 72. Da sämtliche Module sowie sämtliche Benetzungsvorrichtungen im wesentlichen gleich aufgebaut sind, soll der Einfachheit halber nur die Benetzungsvorrichtung 4 für das erste Modul 2 näher beschrieben werden, wozu auch auf Fig. 5 verwiesen werden soll. Fig. 5 zeigt einen Schnitt entlang der Linie A-A der Fig. 1.

Die Benetzungsvorrichtung ist mit Sprühdüsen 16 ausgestattet, um das zweite fluide Medium mit einem dritten fluiden Medium zu benetzen. Die Sprühdüse 16 kann beispielsweise eine Hohlkegeldüse, bevorzugt eine Flachstrahldüse sein. Vorteil der Flachstrahldüse ist, dass diese einen grösseren Querschnitt haben und somit weniger Sprühdüsen 16 benötigt werden. Ausserdem wird mittels der Flachstrahldüse ein gleichmässigeres Sprühbild als bei Hohlkegeldüsen erzeugt, dass verhindert das vollständige Verdunsten des Wassers auf dem Wärmetauscher und somit das sich Ablagerungen bilden.

Insbesondere ist das zweite Medium ein Gas, bevorzugt Umgebungsluft. Das dritte Medium ist vorzugsweise eine Flüssigkeit, insbesondere Wasser. Ein erste Benetzungsvorrichtung 4 ist für das erste Modul vorgesehen sowie eine zweite Benetzungsvorrichtung 14 für das zweite Modul 12 sowie weitere Benetzungsvorrichtungen 24, 34, 44, 54, 64, 74 für jedes der Module 22, 32, 42, 52, 62, 72. Jede der Benetzungsvorrichtungen für jedes Modul 2 ist unabhängig von der Benetzungsvorrichtung für jedes andere Modul betätigbar. Selbstverständlich besteht auch die Möglichkeit, dass Module paarweise von einer Benetzungsvorrichtung versorgt werden, was in Fig. 5 als Variante dargestellt ist.

Fig. 2 zeigt eine Benetzungsvorrichtung nach dem Stand der Technik. Wie in Fig. 1 weist dieser Wärmeaustauscher 1 weist ein erstes Modul 2 und ein zweites Modul bis ein achtes Modul 12, 22, 32, 42, 52, 62, 72 auf. Jedes der Module ist mit einer Belüftungsvorrichtung, beispielsweise einem Ventilator, ausgestattet, um eine Durchströmung des Moduls mit Luft zu ermöglichen. Auch ist jedes Modul mit einer Benetzungsvorrichtung 4 ausgestattet. Allerdings kann diese Benetzungsvorrichtung nur zentral mittels eines einzigen Absperrelements 5 geregelt werden. Das bedeutet, dass in diesem Fall entweder alle Module besprüht werden oder keines der Module.

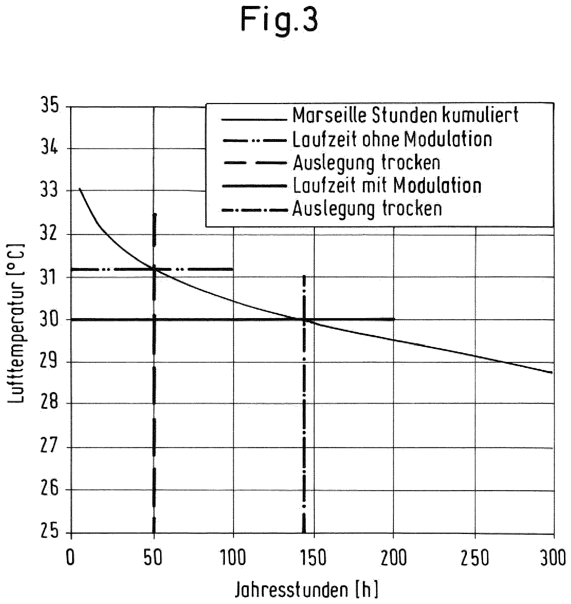

Fig. 3 zeigt ein Diagramm, in welchem auf der Abszisse die Betriebsstunden des Wärmeaustauschers aufgetragen sind. Auf der Ordinate ist die Lufttemperatur aufgetragen. Das Diagramm verdeutlicht die Vorteile der Erfindung an einem Ausführungsbeispiel. Aufgrund der erfindungsgemässen Lösung wird die Trockenauslegungstemperatur von 31.2°C auf 30.0°C abgesenkt, wobei bei gleichen Rahmenbedingungen die Nutzungsdauer von 50h/a auf 145 h/a gesteigert wird. Im Beispiel gemäss Fig. 3 waren die Rahmenbedingungen wie folgt gegeben: 50h Dauer der Besprühung pro Modul bzw. 50 h Dauer der Besprühung pro Wärmeaustauscher.

Fig. 4 zeigt einen möglichen Aufbau eines Moduls eines Wärmeaustauschers. Auf den Gegenstand der Fig. 4 wurde bereits bereits an früherer Stelle eingegangen.

Fig. 5 zeigt einen Schnitt durch eine Anordnung von zwei gegenüberliegenden Modulpaaren 2A, 2B eines Moduls 2 eines Wärmeaustauschers 1, welche verschiedene Möglichkeiten der Anordnung von Benetzungsvorrichtungen 4, 4A, 4B, 4C, 4D zeigt. Jedes der Modulpaare 2A, 2B kann ein eigenständiges Modul ausbilden, alternativ könnte das Modul 2 ringförmig um den zentral angeordneten Luftkanal 11 angeordnet sein. Eine Belüftungseinrichtung 13 ist vorgesehen, welche Luft aus der Umgebung ansaugt und durch den Luftkanal 11 hindurch leitet. Jedes der Module kann wie in Zusammenhang mit Fig. 4 beschrieben, ausgestaltet sein. In Fig. 5 ist auch gezeigt, dass jedes der Module 2A und 2B einen Neigungswinkel zur Vertikalrichtung einschliesst. Dieser Winkel bezüglich der Vertikalrichtung kann im Bereich von mindestens 10° bis und mit 40°, vorzugsweise im Bereich von mindestens 15° bis und mit 30°liegen. Vorteilhafterweise ist der Winkel dadurch bestimmt, dass im Betrieb die Schwerkraft und/oder die Trägheitskräfte, die auf oder in einem Modul auf Tropfen der Flüssigkeit wirken, welche das dritte Medium bildet, im Gleichgewicht mit den Auftriebskräften der Luftströmung sind. Die Grösse und Anzahl der Module 2A, 3B wird üblicherweise entsprechend der benötigten Kühlleistung festgelegt.

Die Benetzungsvorrichtung 4 besteht aus einer Leitung, welche eine Mehrzahl von hintereinander angeordneten Sprühdüsen 16 speist, von denen nur eine einzige mit einem Referenzzeichen versehen ist. Die Zufuhr von Flüssigkeit zu den Sprühdüsen 16 kann mit dem Absperrelement 5 unterbunden werden. Selbstverständlich kann die Benetzungsvorrichtung 4A gemäss einer in Fig. 5 dargestellten Variante auch nur eine einzige Sprühdüse 16 A angeordnet werden. Die Zufuhr von Flüssigkeit zu der Sprühdüse 16A kann mit dem Absperrelement 5A unterbunden werden.

Für das zweite Modul 2B kann entsprechend eine Benetzungsvorrichtung 4B mit einer Sprühdüse 16B vorgesehen sein, die mittels des Absperrelements 5B in gleicher Weise regelbar ist, wie es für die Benetzungsvorrichtung 4A gezeigt ist. Eine Benetzungsvorrichtung 4C weist in Analogie zur Benetzungsvorrichtung 4 eine Mehrzahl von Sprühdüsen 16C aufweist, die gemeinsam über das Absperrelement 5C regelbar sind.

Zusätzlich oder als Alternative hierzu kann die Benetzungsvorrichtung 4D auch zwischen den beiden Modulen 2A und 2B im Luftkanal 11 angeordnet sein. In diesem Fall werden sowohl Modul 2A als auch Modul 2B gleichzeitig von den Sprühdüsen 16D, 16E mit Flüssigkeit versorgt, wobei die Sprühdüsen 16D in Richtung Moduls 2A gerichtet sind und die Sprühdüsen 16E in Richtung des Moduls 2B ausgerichtet sind. Ein Absperrelement 5D regelt die Flüssigkeitszufuhr zu beiden Sprühdüsen 16D und 16E gemeinsam. Alternativ kann auch vorgesehen sein, je ein Absperrelement für jede der Sprühdüsen 16D und 16E vorzusehen.

## Patentansprüche

1. Wärmeaustauscher umfassend zumindest ein erstes Modul (2) und ein zweites Modul (12, 22, 32, 42, 52, 62, 72) für den Wärmeaustausch zwischen einem ersten fluiden Medium und einem zweiten fluiden Medium, wobei das erste fluide Medium durch ein geschlossenes Kanalsystem (3) getrennt vom zweiten fluiden Medium führbar ist, wobei das geschlossene Kanalsystem vom zweiten fluiden Medium umströmbar ist, wobei das zweite fluide Medium gasförmig ist, wobei eine erste Benetzungsvorrichtung (4) für das erste Modul und eine zweite Benetzungsvorrichtung (14, 24, 34, 44, 54, 64, 74) für das zweite Modul vorgesehen ist, mittels welcher das erste Modul und das zweite Modul mit einem dritten fluiden Medium benetzbar sind, wobei die erste Benetzungsvorrichtung (4) für das erste Modul (2) unabhängig von der Benetzungsvorrichtung (14, 24, 34, 44, 54, 64, 74) für das zweite Modul (12, 22, 32, 42, 52, 62, 72) betätigbar ist, wobei ein erstes Absperrelement (5) für die erste Benetzungsvorrichtung und ein zweites Absperrelement (15, 25, 35, 45, 55, 65, 75) für die zweite Benetzungsvorrichtung vorgesehen ist, **dadurch gekennzeichnet, dass** ein Kontrollsystem vorgesehen ist, mittels welchem die Nutzungsdauer jedes der Absperrelemente (5, 15, 25, 35, 45, 55, 65, 75) erfassbar ist, sodass die Absperrelemente basierend auf Daten zur Nutzungsdauer zuschaltbar sind.

2. Wärmeaustauscher nach Anspruch 1, wobei das erste Absperrelement (5) und das zweites Absperrelement (15, 25, 35, 45, 55, 65, 75) zumindest ein mittels eines Magnets betätigbares Ventil, ein hydraulisch betätigbares Ventil oder ein pneumatisch betätigbares Ventil umfassen.

3. Wärmeaustauscher nach einem der vorhergehenden Ansprüche, wobei das erste Medium ein Wärmemittel ist und/oder das zweite Medium Luft ist und/oder das dritte Medium Wasser ist.

4. Wärmeaustauscher nach einem der vorhergehenden Ansprüche, wobei das geschlossene Kanalsystem (3) zumindest ein Rohrsystem, ein System von Lamellen oder ein System von Platten zur Aufnahme des ersten fluiden Mediums umfasst.

5. Wärmeaustauscher nach einem der vorhergehenden Ansprüche, wobei das erste Modul (2) und das zweite Modul (12, 22, 32, 42, 52, 62, 72) derart ausgestaltet sind, sodass das geschlossene Kanalsystem (3) mittels der ersten Benetzungsvorrichtung (4) und / oder der zweiten Benetzungsvorrichtung (14, 24, 34, 44, 54, 64, 74) direkt benetzbar sind.

6. Wärmeaustauscher nach einem der vorhergehenden Ansprüche, wobei das Kanalsystem (3) in einem Neigungswinkel zur Vertikalrichtung angeordnet ist.

7. Wärmeaustauscher nach einem der vorhergehenden Ansprüche, wobei eine Temperaturregelung zur Zuschaltung jeder der ersten oder zweiten Benetzungsvorrichtungen (4,14, 24, 34, 44, 54, 64, 74) vorgesehen ist.

8. Verwendung eines Wärmeaustauschers nach einem der vorhergehenden Ansprüche in einer Kälteanlage für die Raumkühlung und / oder Rückkühlung.

9. Verfahren zur Benetzung eines Wärmeaustauschers, umfassend zumindest ein erstes Modul (2) und ein zweites Modul (12, 22, 32, 42, 52, 62, 72) für den Wärmeaustausch zwischen einem ersten fluiden Medium und einem zweiten fluiden Medium, wobei das erste fluide Medium durch ein geschlossenes Kanalsystem (3) getrennt vom zweiten fluiden Medium geführt wird, wobei das geschlossene Kanalsystem (3) vom zweiten fluiden Medium umströmt wird, wobei das zweite fluide Medium gasförmig ist, und eine erste Benetzungsvorrichtung (4) für das erste Modul und eine zweite Benetzungsvorrichtung (14, 24, 34, 44, 54, 64, 74) für das zweite Modul (12, 22, 32, 42, 52, 62, 72) vorgesehen ist, mittels welcher das erste Modul und das zweite Modul mit einem dritten fluiden Medium benetzt werden, wobei die erste Benetzungsvorrichtung (4) für das erste Modul (2) unabhängig von der Benetzungsvorrichtung (14, 24, 34, 44, 54, 64, 74) für das zweite Modul (12, 22, 32, 42, 52, 62, 72) betätigt wird, **dadurch gekennzeichnet, dass** die Nutzungsdauer jeder der Benetzungsvorrichtungen (4, 14, 24, 34, 44, 54, 64, 74) von einem Kontrollsystem registriert wird und jede der Benetzungsvorrichtungen in Abhängigkeit von der bisherigen Nutzungsdauer bei Bedarf zugeschaltet werden kann.

10. Verfahren nach Anspruch 9, wobei die Austrittstemperatur des ersten fluiden Mediums aus dem Wärmeaustauscher gemessen wird und in Abhängigkeit von der Austrittstemperatur zumindest eine der Benetzungsvorrichtungen (4,14, 24, 34, 44, 54, 64, 74) zugeschaltet oder abgeschaltet werden kann.

## Claims

1. A heat exchanger including at least one first module (2) and one second module (12, 22, 32, 42, 52, 62, 72) for the heat exchange between a first fluid medium and a second fluid medium, wherein the first fluid medium can be conducted through a closed channel system (3) separate from the second fluid medium, with the closed channel system being able to be flowed around by the second fluid medium and with the second fluid medium being gaseous, wherein a first wetting apparatus (4) is provided for the first module and a second wetting apparatus (14, 24, 34, 44, 54, 64, 74) is provided for the second module by means of which wetting apparatus the first module and the second module can be wetted by a third fluid medium, with the first wetting apparatus (4) for the first module (2) being able to be actuated independently of the wetting apparatus (14, 24, 34, 44, 54, 64, 74) for the second module (12, 22, 32, 42, 52, 62, 72), wherein a first blocking element (5) is provided for the first wetting apparatus and a second blocking element (15, 25, 35, 45, 55, 65, 75) is provided for the second wetting apparatus, **characterized in that** a monitoring system is provided by means of which the period of use of each of the blocking elements (5, 15, 25, 35, 45, 55, 65, 75) can be detected so that the blocking elements can be switched on based on the data of the period of use.

2. A heat exchanger in accordance with claim 1, wherein the first blocking element (5) and the second blocking element (15, 25, 35, 45, 55, 65, 75) include at least one valve which can be actuated by means of a magnet, a valve which can be actuated hydraulically or a valve which can be actuated pneumatically.

3. A heat exchanger in accordance with any one of the preceding claims, wherein the first medium is a heating agent and/or the second medium is air and/or the third medium is water.

4. A heat exchanger in accordance with any one of the preceding claims, wherein the closed channel system (3) includes at least one pipe system, a system of fins or a system of plates for taking up the first fluid medium.

5. A heat exchanger in accordance with any one of the preceding claims, wherein the first module (2) and the second module (12, 22, 32, 42, 52, 62, 72) are configured so that the closed channel system (3) can be wetted directly by means of the first wetting apparatus (4) and/or the second wetting apparatus (14, 24, 34, 44, 54, 64, 74).

6. A heat exchanger in accordance with any one of the preceding claims, wherein the channel system (3) is arranged at an angle of inclination to the vertical direction.

7. A heat exchanger in accordance with any one of the preceding claims, wherein a temperature regulation is provided for switching in each of the first or second wetting devices (4, 14, 24, 34, 44, 54, 64, 74).

8. Use of a heat exchanger in accordance with any one of the preceding claims in a cooling plant for room cooling and/or heat exchange.

9. A method of wetting a heat exchanger including at least one first module (2) and one second module (12, 22, 32, 42, 52, 62, 72) for the heat exchange between a first fluid medium and a second fluid medium, wherein the first fluid medium is conducted through a closed channel system (3) separate from the second fluid medium, with the closed channel system (3) being flowed around by the second fluid medium, with the second fluid medium being gaseous, and a first wetting apparatus (4) is provided for the first module and a second wetting apparatus (14, 24, 34, 44, 54, 64, 74) is provided for the second module (12, 22, 32, 42, 52, 62, 72) by means of which the first module and the second module can be wetted by a third fluid medium, with the first wetting apparatus (4) for the first module (2) being able to be actuated independently of the wetting apparatus (14, 24, 34, 44, 54, 64, 74) for the second module (12, 22, 32, 42, 52, 62, 72), **characterized in that** the period of use of each of the wetting apparatus (4, 14, 24, 34, 44, 54, 64, 74) is registered by a monitoring system and each of the wetting apparatus can be switched on as required in dependence on the prior period of use.

10. A method in accordance with claim 9, wherein the exit temperature of the first fluid medium from the heat exchanger is measured and at least one of the wetting apparatus (4, 14, 24, 34, 44, 54, 64, 74) can be switched on or switched off in dependence on the exit temperature.

## Revendications

1. Échangeur de chaleur, comprenant au moins un premier module (2) et un deuxième module (12, 22, 32, 42, 52, 62, 72) pour l'échange de chaleur entre un premier milieu fluide et un deuxième milieu fluide, dans lequel le premier milieu fluide peut être guidé à travers un système de canaux fermé (3) séparé du deuxième milieu fluide, dans lequel le système de canaux fermé peut être circulé par le deuxième milieu fluide, dans lequel le deuxième milieu fluide est gazeux, dans lequel un premier dispositif de mouillage (4) est prévu pour le premier module et un deuxième dispositif de mouillage (14, 24, 34, 44, 54, 64, 74) pour le deuxième module, au moyen duquel le premier module et le deuxième module sont mouillable avec un troisième milieu fluide, dans lequel le premier dispositif de mouillage (4) pour le premier module (2) peut être actionné, indépendant du dispositif de mouillage (14, 24, 34, 44, 54, 64, 74) pour le deuxième module (12, 22, 32, 42, 52, 62, 72), dans lequel un premier élément de fermeture (5) est prévu pour le premier dispositif de mouillage et un deuxième élément de fermeture (15, 25, 35, 45, 55, 65, 75) pour le deuxième dispositif de mouillage, **caractérisé en ce qu'**un système de contrôle est prévu au moyen duquel la durée d'utilisation de chacun des éléments de fermeture (5, 15, 25, 35, 45, 55, 65, 75) peut être détectée, de sorte que les éléments de fermeture peuvent être activés, basés sur des données sur la durée d'utilisation.

2. Échangeur de chaleur selon la revendication 1, dans lequel le premier élément de fermeture (5) et le deuxième élément de fermeture (15, 25, 35, 45, 55, 65, 75) comprennent au moins une vanne, qui peut être actionnée au moyen d'un aimant, une vanne actionnable hydrauliquement ou une vanne actionnable pneumatiquement.

3. Échangeur de chaleur selon l'une des revendications précédentes, dans lequel le premier milieu est un moyen de chauffage et / ou le deuxième milieu est de l'air et / ou le troisième milieu est de l'eau.

4. Échangeur de chaleur selon l'une des revendications précédentes, dans lequel le système de canaux fermé (3) comprend au moins un système de conduites, un système de lamelles ou un système de plateaux pour recevoir le premier milieu fluide.

5. Échangeur de chaleur selon l'une des revendications précédentes, dans lequel le premier module (2) et le deuxième module (12, 22, 32, 42, 52, 62, 72) sont configurée de telle sorte, que le système de canaux fermé (3) est mouillable directement au moyen du premier dispositif de mouillage (4) et / ou du deuxième dispositif de mouillage (14, 24, 34, 44, 54, 64, 74).

6. Échangeur de chaleur selon l'une des revendications précédentes, dans lequel le système de canaux (3) est arrangé à un angle d'inclinaison à la direction verticale.

7. Échangeur de chaleur selon l'une des revendications précédentes, dans lequel un réglage température est prévu pour activer chacune des premier ou deuxième dispositifs de mouillage (4, 14, 24, 34, 44, 54, 64, 74).

8. L'utilisation d'un échangeur de chaleur selon l'une des revendications précédentes dans une installation frigorifique pour le refroidissement de locaux et / ou la réfrigération de retour.

9. Procédé de mouillage d'un échangeur de chaleur, comprenant au moins un premier module (2) et un deuxième module (12, 22, 32, 42, 52, 62, 72) pour l'échange de chaleur entre un premier milieu fluide et un deuxième milieu fluide, dans lequel le premier milieu fluide est guidé à travers un système de canaux fermé (3) séparé du deuxième milieu fluide, dans lequel le système de canaux fermé (3) est circulé par le deuxième milieu fluide, dans lequel le deuxième milieu fluide est gazeux, et un premier dispositif de mouillage (4) est prévu pour le premier module et un deuxième dispositif de mouillage (14, 24, 34, 44, 54, 64, 74) pour le deuxième module (12, 22, 32, 42, 52, 62, 72), au moyen duquel le premier module et le deuxième module sont mouillés avec un troisième milieu fluide, dans lequel le premier dispositif de mouillage (4) pour le premier module (2) est actionné, indépendant du dispositif de mouillage (14, 24, 34, 44, 54, 64, 74) pour le deuxième module (12, 22, 32, 42, 52, 62, 72), **caractérisé en ce que** la durée d'utilisation de chacun des dispositifs de mouillage (4, 14, 24, 34, 44, 54, 64, 74) est enregistrée par un système de contrôle et chacun des dispositifs de mouillage peut être activé dépendant de la durée d'utilisation jusqu'à présent, si besoin.

10. Procédé selon la revendication 9, dans lequel la température sortie du premier milieu fluide d'échangeur de chaleur est mesurée et au moins un des dispositifs de mouillage (4, 14, 24, 34, 44, 54, 64, 74) peut être activé ou désactivé dépendant de la température sortie.
